## Europäisches Patentamt
## European Patent Office
## Office européen des brevets

(11) Veröffentlichungsnummer: **0 169 551**
**B1**

(12) # EUROPÄISCHE PATENTSCHRIFT

(45) Veröffentlichungstag der Patentschrift:
**07.12.88**

(21) Anmeldenummer: **85109233.8**

(22) Anmeldetag: **23.07.85**

(51) Int. Cl.⁴: **H 04 Q 3/545,** H 04 M 3/36,
H 04 Q 11/04

(54) Schaltungsanordnung für Fernmeldevermittlungsanlagen, insbesondere Fernsprechvermittlungsanlagen, mit informationsverarbeitenden Schaltwerken und Verkehrsmesseinrichtungen.

(30) Priorität: **26.07.84 DE 3427621**

(43) Veröffentlichungstag der Anmeldung:
**29.01.86 Patentblatt 86/5**

(45) Bekanntmachung des Hinweises auf die Patenterteilung:
**07.12.88 Patentblatt 88/49**

(84) Benannte Vertragsstaaten:
**AT BE CH DE FR GB IT LI NL SE**

(56) Entgegenhaltungen:
**PROCEEDINGS OF THE TENTH INTERNATIONAL TELETRAFFIC CONGRESS, 9.-15. Juni 1983, Montreal, CA, Sitzung 5.2, Heft 4, Seiten 1-8; L.J. FORYS: "Performance analysis of a new overload strategy"**
**PROCEEDINGS OF THE TENTH INTERNATIONAL TELETRAFFIC CONGRESS, 9.-15. Juni 1983, Montreal, CA, Sitzung 5.2, Heft 2, Seiten 1-6; B.T. DOSHI et al.: "Analysis of overload control schemes for a class of distributed switching machines"**
**PROCEEDINGS OF THE TENTH INTERNATIONAL TELETRAFFIC CONGRESS, 9.-15. Juni 1983, Montreal, CA, Sitzung 1.3, Heft 4, Seiten 1-9; B. WALLSTRÖM: "A feedback queue with overload control"**

(73) Patentinhaber: **Siemens Aktiengesellschaft Berlin und München, Wittelsbacherplatz 2, D-8000 München 2 (DE)**

(72) Erfinder: **Jans, Herbert, Dr.-Ing., Ammerseestrasse 34, D-8027 Neuried (DE)**

(56) Entgegenhaltungen: (Fortsetzung)
**IEEE TRANSACTIONS ON COMMUNICATIONS, Band COM-21, Nr. 9, September 1973, Seiten 1027-1031, IEEE, New York, US; F.T. MAN: "Real-time testing of automatic overload control systems in a laboratory environment"**

ACTORUM AG

# Beschreibung

Die Erfindung bezieht sich auf eine Schaltungsanordnung für Fernmeldevermittlungsanlagen, insbesondere Fernsprechvermittlungsanlagen, mit zentralen und/oder teilzentralen informationsverarbeitenden Schaltwerken mit einer hinsichtlich der Informations-Verarbeitungskapazität begrenzten Leistungsfähigkeit, und mit die Informationsverarbeitungsbelastung der Schaltwerke ausgleichenden und hierzu einer vorübergehenden Aufnahme von Informations-Verarbeitungsanforderungen dienenden, den Schaltwerken vorgeordneten Pufferspeichern, und mit Verkehrsmesseinrichtungen zur Erkennung von Informationsverarbeitungs-Verkehrsüberlastungen jeweils eines Schaltwerkes und zur Abwehr solcher Überlastungen mittels von den Verkehrsmesseinrichtungen beeinflussten Anforderungsabweicheinrichtungen, die eintreffende Verarbeitungsanforderungen quantitativ unterteilen in anzunehmende und demgemäss dem jeweiligen Pufferspeicher zugeführte Verarbeitungsanforderungen einerseits und in dem Pufferspeicher nicht zugeführte Verarbeitungsanforderungen andererseits.

Eine Schaltungsanordnung dieser Art ist bereits durch die Zeitschrift «IEEE Transactions on Communications» (September 1973, Seite 1027 ff) bekannt. Ein Pufferspeicher für Informations-Verarbeitungsanforderungen ist in der Regel als FiFo-Speicher aufgebaut. Das bedeutet, dass in der gleichen Reihenfolge, wie einem solchen Speicher Informations-Verarbeitungsanforderungen nacheinander zugeführt werden, sie auch nacheinander von ihm abgegeben werden. In einer Schaltungsanordnung der zuvor angegebenen Art möge es sich bei diesen Informations-Verarbeitungsanforderungen um Verbindungsherstellungsaufträge handeln. Diese treffen von Teilnehmerstellen oder über Verbindungsleitungen ein. Bei Informations-Verarbeitungsanforderungen seitens Teilnehmerstellen kann es sich um den die Herstellung einer Verbindung einleitenden Teilnehmeranruf oder auch um anschliessend abgegebene Wahlkennzeichen, die den einzelnen Ziffern einer Rufnummer entsprechen mögen, handeln. Bei Informations-Verarbeitungsanforderungen, die von einer Leitungsabschlussschaltung einer ankommend belegten Verbindungsleitung eintreffen, kann es sich um das Schaltkennzeichen einer ankommenden Belegung oder um eintreffende Wahlkennzeichen handeln. Wird eine Verbindungsleitung abgehend belegt, so können entgegen der Verbindungsherstellungsrichtung das Wahlendekennzeichen, das Beginnzeichen sowie Gebührenzählimpulse eintreffen. Diese Schaltkennzeichen treffen also in einer Leitungsabschlussschaltung einer abgehend belegten Verbindungsleitung ein und haben ebenfalls Informations-Verarbeitungsanforderungen zur Folge, die die jeweils belegte Leitungsabschlussschaltung zum betreffenden informationsverarbeitenden Schaltwerk hin abgibt.

Bei zentralen und/oder teilzentralen informationsverarbeitenden Schaltwerken in einer Schaltungsanordnung der eingangs angegebenen Art treffen also nacheinander Informations-Verarbeitungsanforderungen ein, deren Anfall zufallsbedingt ist und vom jeweiligen Teilnehmerverhalten jedes der beteiligten Teilnehmer abhängt. Die Informations-Verarbeitungsbelastung stellt eine demgemäss stets schwankende Grösse dar. Die betreffenden zentralen und/oder teilzentralen informationsverarbeitenden Schaltwerke, die hinsichtlich der Informations-Verarbeitungskapazität naturgemäss eine begrenzte Leistungsfähigkeit haben, sind hinsichtlich ihrer Leistungsfähigkeit dem jeweils auftretenden Bedarf angepasst. Eine solche Anpassung der Informations-Verarbeitungskapazität an die stets schwankende Informations-Verarbeitungsbelastung unterliegt verschiedenen Forderungen. Erstens soll eine möglichst hohe Auslastung eines zentralen und/oder teilzentralen informationsverarbeitenden Schaltwerkes erzielt werden; dies dient einer möglichst grossen Wirtschaftlichkeit. Zweitens muss sichergestellt werden, dass der Bedarf an Informations-Verarbeitungskapazität befriedigt wird; der Anteil von Verbindungen, die wegen Überlastung zentraler und/oder teilzentraler informationsverarbeitender Schaltwerke nicht hergestellt werden kann, soll so klein wie möglich sein.

Um die beiden zuvor angegebenen Forderungen zu erfüllen, werden in Schaltungsanordnungen der eingangs genannten bekannten Art die dort bereits erwähnten Pufferspeicher vorgesehen, die in für den Fachmann geläufiger Weise bei pro Zeiteinheit schwankendem Bedarf an Informations-Verarbeitungsanforderungen sukzessive nacheinander und hinsichtlich der Informations-Verarbeitungsleistung gleichmässig zur Bearbeitung durch die betreffenden zentralen und/oder teilzentralen informationsverarbeitenden Schaltwerke kommen. Dieser ausgleichende Effekt ist je stärker, desto grösser ein solcher Pufferspeicher ausgelegt wird und desto grösser die maximalen Wartezeiten zwischen Eingabe einer jeweiligen Informations-Verarbeitungsanforderung in diesen Pufferspeichern und Abruf derselben aus ihm sind.

Jedoch sind auch für diese Wartezeit nach oben hin wiederum Grenzen gesetzt. Zum Beispiel soll ein Teilnehmer, der durch Schliessung seiner Teilnehmerleitungsschleife über seine Teilnehmerstelle einen Teilnehmeranruf getätigt hat, um eine Verbindung durch Wahl entsprechender Ziffern einer Teilnehmerrufnummer herstellen zu lassen, im Höchstfall nur eine bestimmte Zeit, zum Beispiel eine Sekunde, warten müssen, bis er nach Abheben des Handapparates an seiner Teilnehmerstelle den Wählton erhält. Gibt er dann nacheinander die verschiedenen Ziffern der von ihm gewählten Teilnehmerrufnummer ab, so müssen ferner die einzelnen Ziffern von dem betreffenden zentralen und/oder teilzentralen informationsverarbeitenden Schaltwerk rechtzeitig aufgenommen werden; einerseits muss sichergestellt sein, dass immer eine Ziffer aufgenommen worden ist, bevor die nächste Ziffer eintrifft; darüber hinaus ist es in der Regel sogar erforderlich, dass eine Ziffer während der Dauer ihrer Abgabe durch den wählenden Teilnehmer aufgenommen wird, zum Beispiel bei Tonfrequenz- oder Mehrfachcode-Wahlverfahren. Handelt es sich um Schaltkennzeichen, die in einer Leitungsabschlussschaltung einer ankommend belegten Verbindungsleitung eintreffen, so muss zum Beispiel das Belegungskennzeichen verarbeitet sein, bevor die erste eintreffende Ziffer einer gewählten Teilnehmerrufnummer zur Verarbeitung ansteht.

Aus den zuvor im einzelnen erläuterten Gründen ergibt sich also unter anderem auch die Forderung, dass die für einzelne Informations-Verarbeitungsanforderungen entstehenden Wartezeiten eine bestimmte obere Grenze nicht überschreiten dürfen. Deshalb werden in Schaltungsanordnungen der eingangs genannten bekannten Art Verkehrsmesseinrichtungen vorgesehen, die Anforderungsabweiseinrichtungen beeinflussen, und die bewirken, dass zeitweilig und/oder ein Teil von anstehenden Informations-Verarbeitungsanforderungen abgewiesen werden. Bei einer Abweisung einer Informations-Verarbeitungsanforderung wird in der betreffenden teilnehmerindividuellen oder verbindungsindividuellen Schalteinrichtung, zum Beispiel Teilnehmeranschlussschaltung, Wahlempfangssatz, Internverbindungssatz oder Leitungsabschlussschaltung einer ankommend oder abgehend belegten Verbindungsleitung, bewirkt, dass einerseits an den betreffenden rufenden Teilnehmer ein entsprechendes Hörzeichen, zum Beispiel Besetztzeichen, ausgesendet wird und dass andererseits eine Aufnahme weiterer Schaltkennzeichen, bzw. deren Weiterleitung zu dem betreffenden zentralen und/oder teilzentralen informationsverarbeitenden Schaltwerk unterbunden wird.

Wie bereits ausgeführt wurde, ist der Einfall von Informations-Verarbeitungsanforderungen in gewissem Masse ungleichmässig d.h. statistisch verteilt. Dies hängt einerseits vom individuellen Teilnehmerverhalten ab. Durch die Vielzahl der beteiligten Teilnehmer ergibt sich allerdings in bekannter Weise in gewissem Masse ein Ausgleich im Sinne einer Zufallsverteilung. Es können sich aber auch hierbei zufällig Belastungssprünge ergeben. Solche Belastungssprünge können darüber hinaus aber durch für die betreffende Gruppe von Teilnehmern gemeinsame Einflüsse entstehen, zum Beispiel durch Naturereignisse, Katastrophen, Fernsehprogramm-Beginn oder -Ende, Gebührentarifumschaltungszeitpunkte und dergleichen. So kann es also vorkommen, dass zeitweilig der erwähnte Pufferspeicher dauernd voll ist, und dass solange in dementsprechendem Masse Informations-Verarbeitungsanforderungen teilweise abgewiesen werden, dass also Verbindungsherstellungswünsche teilweise nicht erfüllt werden können, obwohl die dafür erforderlichen Verbindungswege in den betreffenden Koppelfeldern und den Bündeln von Verbindungsleitungen bzw. Kanälen frei wären. Der Pufferspeicher kann auch durch systeminterne Engpässe wie z.B. bei vorübergehendem Ausfall von Teilkomponenten des Systems (Recovery) für eine gewisse Zeit voll werden, was ebenfalls zur Abweisung von Informations-Verarbeitungsanforderungen führt.

Für die Erfindung besteht die Aufgabe, die hinsichtlich der Informations-Verarbeitungskapazität begrenzte Leistungsfähigkeit von zentralen und/oder teilzentralen informationsverarbeitenden Schaltwerken noch besser zu nutzen; in diesem Zusammenhang ist es wichtig, dass Verbindungsherstellungswünsche, die wegen momentan nicht ausreichender Leistungsfähigkeit hinsichtlich der Informations-Verarbeitungskapazität der betreffenden Schaltwerke nicht erfüllt werden können, möglichst nicht erst von einer Informations-Verarbeitungsabweisung betroffen werden, wenn für dieselbe Verbindungsherstellung bereits einige Informations-Verarbeitungsvorgänge durchgeführt worden sind. Es liegt auf der Hand, dass dadurch bereits in Anspruch genommene Informations-Verarbeitungskapazität verlorengehen würde. Beachtlich ist im Zusammenhang hiermit und mit der genannten Aufgabe, dass im Einzelfall mit zunehmender Wartezeit einer Informations-Verarbeitungsanforderung auf eine Verarbeitung der betreffenden Information durch das jeweilige Schaltwerk die Wahrscheinlichkeit ansteigt, dass ein rufender Teilnehmer nicht die beabsichtigte Verbindungsherstellung weiterführt (zum Beispiel weil er beim Warten auf den Wählton die Geduld verloren hat), oder dass im Zuge einer Verbindungsherstellung ein Wahlkennzeichen ein vorheriges Wahlkennzeichen oder ein vorheriges Schaltkennzeichen (zum Beispiel Belegungskennzeichen in einer Leitungsabschlussschaltung einer ankommenden Verbindungsleitung) eingeholt hat, und dass eine Verbindungsherstellung aus technischen Gründen nicht mehr ordnungsgemäss abgewickelt werden kann, weil die betreffenden Wahlkennzeichen bzw. Schaltkennzeichen nicht rechtzeitig zur Verarbeitung durch das betreffende Schaltwerk gekommen sind.

Die Erfindung löst die gestellte Aufgabe dadurch, dass die dem Pufferspeicher unmittelbar nicht zugeführten Informations-Verarbeitungsanforderungen einem FiFo-LiFo-Speicher zugeführt werden, der einerseits als FiFo-Speicher arbeitet, sofern er selbst voll ist und sofern in dem Pufferspeicher noch Verarbeitungsanforderungen gespeichert vorliegen, insbesondere wenigstens noch eine Verarbeitungsanforderung vorliegt, und der die dann von ihm ausgestossenen Verarbeitungsanforderungen als nicht anzunehmend markiert, und der andererseits als LiFo-Speicher arbeitet, sofern in dem Pufferspeicher keine oder nur noch sehr wenige (zum Beispiel eine) Verarbeitungsanforderungen gespeichert vorliegen, wobei ihm über einen LiFo-Ausgang entnommene Verarbeitungsanforderungen als anzunehmend markiert und/oder unmittelbar einem Schaltwerk zur Verarbeitung zugeführt werden.

Durch die Erfindung wird erreicht, dass für den Fall eines plötzlichen Absinkens der Informations-Verarbeitungsbelastung, wenn also der Pufferspeicher zunächst dauernd voll war, dann aber innerhalb relativ kuzer Zeit leer oder fast leer wird, zusätzlich einige Informations-Verarbeitungsanforderungen, die zunächst nicht als anzunehmend markiert worden waren, nachträglich als anzunehmend markiert werden. Dabei ist dafür gesorgt, dass von diesen zunächst nicht als anzunehmend markierten Informations-Verarbeitungsanforderungen mit Vorrang diejenigen nachträglich angenommen werden (also als anzunehmend markiert werden) die wegen der jeweils bereits verstrichenen Wartezeit noch die relativ besten Chancen für eine erfolgreiche Weiterführung der jeweiligen Verbindungsherstellung haben. Die besten Chancen bestehen bei denjenigen der zunächst nicht als anzunehmend markierten Informations-Verarbeitungsanforderungen, bei denen bis zu dem betreffenden Zeitpunkt noch die niedrigsten Wartezeiten jeweils verstrichen sind.

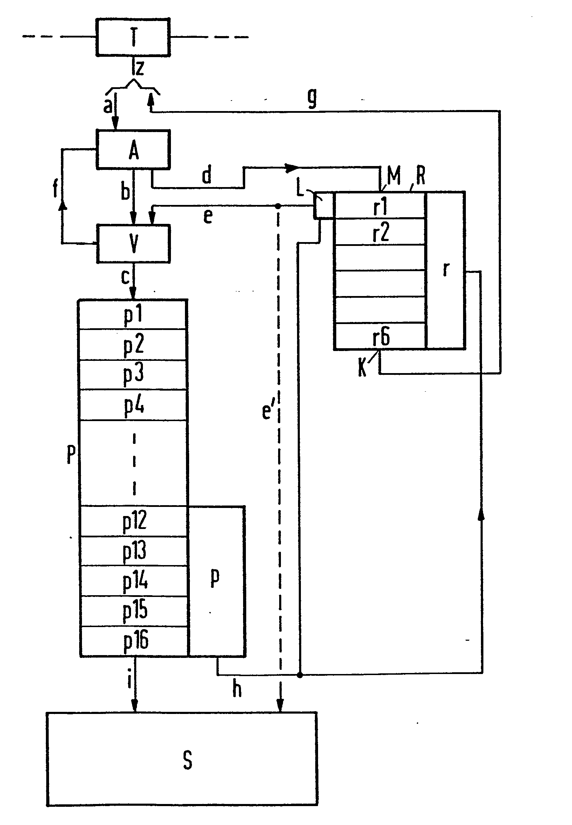

In der Zeichnung ist ein Ausführungsbeispiel der Erfindung nur in wesentlich zu ihrem Verständnis beitragenden Bestandteilen dargestellt, worauf sie jedoch keineswegs beschränkt ist.

Die Beschreibung lehnt an eine in der DE-OS 3 32 8 571 (EPA-134 009) dargestellte und darin sehr eingehend erläuterte Schaltungsanordnung an. Darin ist eine Schaltungsanordnung für Fernmeldevermittlungsanlagen beschrieben, insbesondere für Fernsprechvermittlungsanlagen, mit zentralen und/oder teilzentralen informationsverarbeitenden Schaltwerken mit einer hinsichtlich der Informations-Verarbeitungskapazität begrenzten Leistungsfähigkeit, und mit die Informations-Verarbeitungsbelastung der Schaltwerke ausgleichenden und hierzu einer vorübergehenden Aufnahme von Informations-Verarbeitungsanforderungen dienenden, den Schaltwerken vorgeordneten Pufferspeichern, und mit Verkehrsmesseinrichtungen zur Erkennung von Informationsverarbeitungs-Verkehrsüberlastungen jeweils eines Schaltwerkes und zur Abwehr solcher Überlastungen mittels von den Verkehrsmesseinrichtungen beeinflussten Anforderungsabweiseinrichtungen, die eintreffende Verarbeitungsanforderungen quantitativ unterteilen in anzunehmende und demgemäss dem jeweiligen Pufferspeicher zugeführte Verarbeitungsanforderungen einerseits und in dem Pufferspeicher nicht zugeführte Verarbeitungsanforderungen andererseits.

Im untersten Teil der Zeichnung ist ein informationsverarbeitendes Schaltwerk S angedeutet. Derartige informationsverarbeitende Schaltwerke sind in grosser Vielfalt bereits bekannt. Hierbei kann es sich um ein teilzentrales sowie um ein zentrales informationsverarbeitendes Schaltwerk handeln. Dieses Schaltwerk kann zum Beispiel ein Steuerwerk in einer zentral und/oder teilzentral gesteuerten Fernsprechvermittlungsanlage sein, das die für eine jede herzustellende und aufrechtzuerhaltende Verbindung erforderlichen Wahlkennzeichen und Schaltkennzeichen aufnimmt und anhand dieser sämtliche Steuerbefehle erarbeitet, die zur Herstellung und Aufrechterhaltung jeder dieser Verbindungen erforderlich sind.

Im obersten Teil der Zeichnung ist eine teilnehmerindividuelle oder verbindungsindividuelle Schalteinrichtung T angedeutet. Hierbei kann es sich um eine Teilnehmeranschlussschaltung sowie um eine Leitungsabschlussschaltung einer Verbindungsleitung, sowie um einen Internverbindungssatz, einen Amtsverbindungssatz und dergleichen handeln. Verbindungsleitungen können auch durch entsprechende Verbindungskanäle realisiert sein. Bei Teilnehmeranschlussschaltungen handelt es sich also um teilnehmerindividuelle Schalteinrichtungen, wohingegen es sich bei den übrigen der genannten Einrichtungen um verbindungsindividuelle Schalteinrichtungen handelt.

Über sämtliche der genannten Schalteinrichtungen können Schaltkennzeichen und Wahlkennzeichen eintreffen. Bei diesen Schaltkennzeichen geht es zum Beispiel um den Teilnehmeranruf bei Teilnehmeranschlussschaltungen, um das Belegungskennzeichen bei belegbaren Leitungsabschlussschaltungen und so weiter; ferner geht es bei diesen Schaltkennzeichen um das Wahlendekennzeichen, um das Belegtkennzeichen, um das Beginnzeichen, um Gebührenzählimpulse und dergleichen. Ausser diesen Schaltkennzeichen sind auch Wahlkennzeichen zu verarbeiten, die aus den einzelnen Ziffern einer mehrziffrigen Teilnehmerrufnummer bestehen. – Alle diese Schaltkennzeichen und Wahlkennzeichen treffen in den genannten teilnehmerindividuellen und verbindungsindividuellen Schalteinrichtungen ein und bedürfen einer Verarbeitung (teilnehmerindividuell und/oder verbindungsindividuell) durch das Schaltwerk S.

Mit den teilnehmerindividuellen und/oder verbindungsindividuellen Schalteinrichtungen T steht in an sich bekannter Weise eine Abfrageeinrichtung in Verbindung, die diese Schalteinrichtungen kontinuierlich auf ein Auftreten von Schaltkennzeichen bzw. Wahlkennzeichen hin abfragt z.B. nach dem Prinzip des «Last Look» (vgl. «Rechnergesteuerte Vermittlungssysteme» von Peter R. Gerke [Springer-Verlag, Berlin/Heidelberg/New York 1972]), um sie dem Schaltwerk S zuzuleiten. Jedes dieser Schaltkennzeichen wird als eine Informations-Verarbeitungsanforderung über die Informationswege a, b, c und i dem Schaltwerk S zugeleitet. Diese Verarbeitungsanforderungen umfassen unter anderem eine Angabe über den Herkunftsort der jeweiligen Information. Dies kann eine jeweils einer bestimmten Teilnehmerstation fest zugeordnete Teilnehmeranschlussschaltung sein oder eine bestimmte der verbindungsindividuellen Schalteinrichtungen.

Die zentralen und/oder teilzentralen informationsverarbeitenden Schaltwerke weisen eine hinsichtlich der Informations-Verarbeitungskapazität begrenzte Leistungsfähigkeit auf. Dies ist bekanntlich eine Frage des technischen und wirtschaftlichen Aufwandes und seiner optimalen Nutzung. Da die Informations-Verarbeitungsbelastung eines zentralen bzw. teilzentralen Schaltwerkes stets Schwankungen unterliegt, die durch Einflüsse im Verhalten der beteiligten Teilnehmer bedingt sind, jedoch auch von für die betreffenden Teilnehmer gleichartig sich auswirkenden Einflüssen herrühren können, ist dem Schaltwerk S ein Pufferspeicher P vorgeordnet, in den die Verarbeitungsanforderungen in der Reihenfolge ihres Auftretens über den Informationsweg c eingegeben werden, und aus dem sie über den Informationsweg i vom Schaltwerk S sukzessive nacheinander abgerufen werden. Der Pufferspeicher ist aus einer Anzahl von Speicherzeilen $p1$ bis $p16$ aufgebaut. Jede Speicherzeile dient zur Aufnahme einer Verarbeitungsanforderung. Die einzelnen Verarbeitungsanforderungen werden im Pufferspeicher P von der obersten Speicherzeile $pl$ aus von Speicherzeile zu Speicherzeile nach unten weitergegeben und schliessen zur untersten Speicherzeile $P16$ hin lückenlos auf. (Dieses Prinzip kann technisch auch anders in analoger Weise realisiert sein). Jede dieser Verarbeitungsanforderungen umfasst u.a. Angaben über Herkunftsort bzw. Bestimmungsort und die jeweils zur Verarbeitung anstehende Information selbst.

Die dem Pufferspeicher über den Informationsweg c zugeführten Informations-Verarbeitungsanforderungen durchlaufen u.a. eine Verkehrsmesseinrichtung V. Diese zählt in an sich bekannter Weise die pro Zeiteinheit durchlaufenden Informations-Verarbeitungsanforderungen; sie misst also den auf das Schaltwerk S zukommenden Verkehr, also die Menge der Informations-Verarbeitungsanforderungen in Relation zu dem Zeitraum, innerhalb dessen diese auftreten.

Bevor die Informations-Verarbeitungsanforderungen die Verkehrsmesseinrichtung V durchlaufen, durchlaufen sie eine Anforderungsabweiseinrichtung A. Diese hat in an sich bekannter Weise die Aufgabe, bei einem für das betreffende Schaltwerk zu grossen Andrang an Informations-Verarbeitungsanforderungen dafür zu sorgen, dass ein Teil dieser Anforderungen von vornherein abgewiesen wird; denn wenn die Informations-Verarbeitungsbelastung, die auf das Schaltwerk S zukommt, wesentlich oberhalb der Informations-Verarbeitungskapazität des Schaltwerkes liegt, ist es zweckmässig, von den anstehenden Informations-Verarbeitungsanforderungen von vornherein einige auszusondern, um den davon betroffenen Teilnehmern sobald wie möglich ein Signal, zum Beispiel Besetztzeichen, zu geben, damit diese für die Herstellung der jeweils von ihnen gewünschten Verbindung keine weitere nutzlose Mühe mehr aufwenden. Die weiter oben genannte Offenlegungsschrift beschreibt darüber hinaus auch die Möglichkeit, die betreffenden Massnahmen zur Verkehrsmessung an zentraler Stelle also bei einem zentralen Schaltwerk zu treffen, die Abweiseinrichtung aber an dezentraler Stelle, zum Beispiel in Gruppensteuerwerken, vorzusehen, um eine Abweisung von Informations-Verarbeitungsanforderungen möglichst schon am Ursprungsort ihres Entstehens zu bewerkstelligen.

Infolge von starken Belastungseinbrüchen, bei denen also der Andrang von Informations-Verarbeitungsanforderungen schlagartig zurückgeht, kann der Fall eintreten, dass der betreffende Pufferspeicher P plötzlich leer wird. Wie bereits ausgeführt wurde, kann dieser Pufferspeicher auch nicht beliebig gross gemacht werden. Dies hat u.a. auch damit zu tun, dass die Grösse des Pufferspeichers sich auch auf die Dauer der maximalen Wartezeit auswirkt, die für die Bearbeitung der betreffenden Informations-Verarbeitungsanforderungen zum Tragen kommt. Der Vorrat an im Pufferspeicher P gespeicherten Informations-Verarbeitungsaufträgen darf also nicht zu gross sein, weil sonst der einzelne Zeitraum vom Entstehen einer Informations-Verarbeitungsanforderung bis zur Lieferung der entsprechenden Ergebnisse unzulässig gross werden könnte. Wiederum können aber auch in der Betriebssituation, dass die Abweiseinrichtung momentan darauf eingestellt ist, einen bestimmten Teil der insgesamt eingehenden Informations-Verarbeitungsanforderungen von vornherein abzuweisen, starke negative Belastungsschwankungen, also Belastungs-Einbrüche, dazu führen, dass der Pufferspeicher P plötzlich völlig leer wird und das betreffende Schaltwerk kurzzeitig ohne Informations-Verarbeitungsanforderungen bleibt. Dadurch würde die Ausnutzung des betreffenden Schaltwerkes in dem Zeitintervall zwischen dem besagten Belastungseinbruch und der Nachregelung der Abweiseinrichtung durch die Verkehrsmesseinrichtung auf niedrigere Abweisraten dadurch in ungünstiger Weise beeinträchtigt werden, dass das Schaltwerk Verarbeitungskapazität frei hat, während noch ein Teil der Informations-Verarbeitungsanforderungen abgewiesen wird (Trägheit der Regelung).

Zur Abhilfe ist ein Hilfsspeicher R mit insgesamt sechs Speicherzeilen $r1$ bis $r6$ vorgesehen. Die Abweiseinrichtung A hat die Aufgabe, in der Überlastsituation einen Teil der Informations-Verarbeitungsanforderungen abzuweisen. Hierzu teilt die Verkehrsmesseinrichtung V über den Informationsweg f der Abweiseinrichtung A einen bestimmten Prozentsatz von Informations-Verarbeitungsanforderungen mit, die von vornherein abgewiesen werden sollen. Die Abweiseinrichtung A enthält in bekannter Weise eine Abzähleinrichtung, mit deren Hilfe sie diese Abweisung bewerkstelligt. Geht man zum Beispiel davon aus, dass die Verkehrsmesseinrichtung V feststellt, dass in einer gegebenen Betriebssituation 10% der anfallenden Informations-Verarbeitungsanforderungen abzuweisen sind, dann teilt sie diesen Prozentsatz über den Informationsweg f der Abweiseinrichtung A mit. Diese zählt die über den Informationsweg a eintreffenden Informations-Verarbeitungsanforderungen ab; von jeweils zehn Informations-Verarbeitungsanforderungen führt die Abweiseinrichtung neun über den Informationsweg b der Verkehrsmesseinrichtung V zu, von der sie über den Informationsweg c an den Pufferspeicher P weitergegeben werden. Jede zehnte Informations-Verarbeitungsanforderung aber wird von der Abweiseinrichtung A über den Informationsweg d dem Hilfsspeicher R zugeführt.

Der Hilfsspeicher R ist als ein Schieberegister nach dem Prinzip eines Stacks aufgebaut. Eine an ihn abgegebene Informations-Verarbeitungsanforderung wird zunächst in die Speicherzeile r1 eingeschrieben. Trifft über den Informationsweg d eine weitere Informations-Verarbeitungsanforderung von der Abweiseinrichtung A ein, so wird aufgrunddessen die zunächst in der Speicherzeile r1 gespeicherte Informations-Verarbeitungsanforderung in die Speicherzeile r2 weitergeschoben. Die neu eingetroffene Informations-Verarbeitungsanforderung wird dann in die Speicherzeile r1 eingeschrieben. In dieser Weise werden nacheinander über den Informationsweg die eintreffende Verarbeitungsanforderungen in dem als Schieberegister (Stackregister) aufgebauten Hilfsspeicher R weitergeschoben, und zwar letztlich bis zur untersten Speicherzeile r6.

Ist der Hilfsspeicher R voll, sind also in sämtlichen seiner Speicherzeilen r1 bis r6 Informations-Verarbeitungsanforderungen gespeichert, und trifft eine weitere Informations-Verarbeitungsanforderung über den Informationsweg d von der Anforderungsabweiseinrichtung A ein, so stösst der Hilfsspeicher R über den Ausgang K die in der Speicherzeile r6 gespeicherte Informations-Verarbeitungsanforderung aus und markiert sie als nicht anzunehmend. Sie gelangt über den Informationsweg g zu der betreffenden teilnehmerindividuellen oder verbindungsindividuellen Schalteinrichtung; es kann auch vorgesehen werden, dass nur ein Teil der Informations-Verarbeitungsanforderung über den Informationsweg g übertragen wird. Wesentlich ist, dass die Nachricht, dass die betreffende Informations-Verarbeitungsanforderung abgewiesen wurde, zu der betreffenden teilnehmerindividuellen oder verbindungsindividuellen Schalteinrichtung hingelangt. Auf jeden Fall wird aber die letzte Informations-Verarbeitungsanforderung in der angesprochenen Betriebssituation über den Ausgang K ausgestossen, wird also aus der Speicherzeile r6 ausgespeichert und die in den Speicherzeilen r1 bis r5 gespeicherten weiteren Informations-Verarbeitungsanforderungen werden jeweils um eine Speicherzeile in Richtung vom Eingang M zum Ausgang K des Hilfsspeichers R weitergeschoben. Diese Verschiebevorgänge im Hilfsspeicher R werden mit Hilfe eines Steuerungsteiles r in an sich bekannter Weise bewerkstelligt. Im Hinblick auf den Eingang M und den Ausgang K ist der Hilfsspeicher R als FiFo-Speicher ausgebildet und arbeitet nach dessen Prinzip.

Die von der Abweiseinrichtung A dem Pufferspeicher P (über V) unmittelbar nicht zugeführten Informations-Verarbeitungsanforderungen werden also dem Hilfsspeicher R zugeführt. Er arbeitet als FiFo-Speicher, wenn er voll ist, und wenn in dem Pufferspeicher P noch Verarbeitungsanforderungen gespeichert vorliegen. Diese letztere Tatsache wird mittels einer Überwachungseinrichtung p des Pufferspeichers P erkannt. Sobald die Anzahl der im Pufferspeicher P gespeicherten Informations-Verarbeitungsanforderungen eine bestimmte Zahl unterschreitet, zum Beispiel 1 oder 2, gibt die Überwachungseinrichtung p ein Signal über den Informationsweg h zum Hilfsspeicher R, wodurch dessen Steuerteil r veranlasst wird, die Verschieberichtung innerhalb des als Schieberegister aufgebauten Hilfsspeichers R umzudrehen. Diese Verschieberichtung verläuft nun also von der untersten Speicherzeile r6 zur obersten Speicherzeile r1.

Das von der Überwachungseinrichtung p des Pufferspeichers P abgegebene und über den Informationsweg h übertragene Signal gelangt ausserdem zu einer Entnahmeeinrichtung L, die im Zusammenhang mit der Speicherzeile r1 des Hilfsspeichers R vorgesehen ist. Diese Entnahmeeinrichtung entnimmt aufgrund dieses Signales das sie erhält, aus der Speicherzeile r1 die als letzte von der Anforderungsabweiseinrichtung A an den Hilfsspeicher R übertragene Informations-Verarbeitungsanforderung und überträgt sie über den Weg e und die Verkehrsmesseinrichtung V zum Pufferspeicher P. Damit ist diese Informations-Verarbeitungsanforderung nachträglich ebenfalls als anzunehmend markiert. Es besteht auch die Möglichkeit, diese Informations-Verarbeitungsanforderung über den Weg e' direkt dem Schaltwerk S zuzuführen oder anzubieten, also unter Umgehung des Pufferspeichers P.

Sofern nun im Pufferspeicher P die Anzahl der in ihm gespeicherten Informations-Verarbeitungsanforderungen einen bestimmten unteren Grenzwert unterschreitet, gibt also die Überwachungseinrichtung p das genannte Signal ab, durch welches erstens die Verschieberichtung in dem als Schieberegister aufgebauten Hilfsspeicher R in der gegebenen Weise umgedreht wird und durch welches zweitens aus der Speicherzeile r1 sukzessive nacheinander Informations-Verarbeitungsanforderungen entnommen werden und dem Schaltwerk S entweder über den Pufferspeicher P oder direkt zugeführt werden. Bei der angesprochenen Umkehrung der Verschieberichtung im Schieberegister R wickelt dessen Steuerteil r die Verschiebevorgänge in an sich bekannter Weise so ab, dass die in den Speicherzeilen r1 bis r6 gespeicherten Informations-Verarbeitungsanforderungen nach oben hin aufschliessen.

Der Pufferspeicher R ist also ein FiFo-LiFo-Speicher, der als Fi-Fo-Speicher sowie als LiFo-Speicher arbeiten kann. Als FiFo-Speicher arbeitet er, sofern er selbst voll ist und sofern in dem Pufferspeicher noch Verarbeitungsanforderungen gespeichert vorliegen. Er markiert die dann von ihm ausgestossenen Verarbeitungsanforderungen als nicht anzunehmen.

Der Hilfsspeicher R arbeitet jedoch als LiFo-Speicher, sofern in dem Pufferspeicher P keine oder nur noch sehr wenige Informations-Verarbeitungsanforderungen gespeichert vorliegen, wobei die ihm über den LiFo-Ausgang (L) entnommenen Informations-Verarbeitungsanforderungen als anzunehmend markiert und/oder unmittelbar dem Schaltwerk S zur Verarbeitung zugeführt werden.

Es kann vorgesehen werden, dass der Füllungsgrad des Pufferspeichers, unterhalb dessen auch Informations-Verarbeitungsanforderungen über den LiFo-Ausgang (L) des Hilfsspeichers R entnommen werden, durch eine Anzahl von im Pufferspeicher P gespeicherten Informations-Verarbeitungsanforderungen gegeben ist, die gleich der Anzahl von im Hilfsspeicher R speicherbaren Informations-Verarbeitungsanforderungen ist. In diesem Falle würde also die Überwachungseinrichtung p das genannte Signal über den Informationsweg h abgeben, sobald die Anzahl der im Pufferspeicher P gespeicherten Informations-Verarbeitungsanforderungen die Zahl sechs erreicht und/oder unterschreitet. In Abhängigkeit davon würde also in diesem Falle der Steuerteil r des Hilfsspeichers R diesen von seiner FiFo-Funktion auf seine LiFo-Funktion umschalten. Übersteigt die Anzahl der im Pufferspeicher P gespeicherten Informations-Verarbeitungsanforderungen wieder den festgelegten Grenzwert, so wird das über den Signalweg h übertragene Signal wieder weggenommen (bzw. es wird ein Signal mit entgegengesetzter Bedeutung und Wirkung übertragen) und die Verschieberichtung innerhalb des als Schieberegister aufgebauten Hilfsspeichers R wird wieder umgedreht, das heisst Informations-Verarbeitungsanforderungen werden von der Speicherzeile r1 in Richtung zur Speicherzeile r6 verschoben.

**Patentansprüche**

1. Schaltungsanordnung für Fernmeldevermittlungsanlagen, insbesondere Fernsprechvermittlungsanlagen, mit zentralen und/oder teilzentralen informationsverarbeitenden Schaltwerken (S) mit einer hinsichtlich der Informations-Verarbeitungskapazität begrenzten Leistungsfähigkeit, und mit die Informations-Verarbeitungsbelastung der Schaltwerke ausgleichenden und hierzu einer vorübergehenden Aufnahme von Informations-Verarbeitungsanforderungen dienenden, den Schaltwerken vorgeordneten Pufferspeichern (P), und mit Verkehrsmesseinrichtungen (V) zur Erkennung von Informationsverarbeitungs-Verkehrsüberlastungen jeweils eines Schaltwerkes und zur Abwehr solcher Überlastungen mittels von den Verkehrsmesseinrichtungen beeinflussten Anforderungsabweicheinrichtungen (A), die eintreffende Verarbeitungsanforderungen quantitativ unterteilen in anzunehmende und demgemäss dem jeweiligen Pufferspeicher zugeführte Verarbeitungsanforderungen einerseits und in dem Pufferspeicher nicht zugeführte Verarbeitungsanforderungen andererseits, dadurch gekennzeichnet, dass die dem Pufferspeicher (P) unmittelbar nicht zugeführten Informations-Verarbeitungsanforderungen einem FiFo-LiFo-Speicher (R) zugeführt werden, der einerseits als FiFo-Speicher arbeitet, sofern er selbst voll ist und sofern in dem Pufferspeicher noch Verarbeitungsanforderungen gespeichert vorliegen, insbesondere wenigstens noch eine Verarbeitungsanforderung vorliegt, und der die dann von ihm ausgestossenen Verarbeitungsanforderungen als nicht anzunehmend markiert, und der andererseits als LiFo-Speicher arbeitet, sofern in dem Pufferspeicher keine oder nur noch sehr wenige (zum Beispiel eine) Verarbeitungsanforderungen gespeichert vorliegen, wobei ihm über einen LiFo-Ausgang (L) entnommene Verarbeitungsanforderungen als anzunehmend markiert und/oder unmittelbar (e') einem Schaltwerk (S) zur Verarbeitung zugeführt werden.

2. Schaltungsanordnung nach Anspruch 1, dadurch gekennzeichnet, dass die über den LiFo-Ausgang (L) entnommenen Verarbeitungsanforderungen dem Pufferspeicher zugeführt werden (e).

3. Schaltungsanordnung nach Anspruch 1, dadurch gekennzeichnet, dass der Füllungsgrad des Pufferspeichers, unterhalb dessen auch Verarbeitungsanforderungen über den LiFo-Ausgang (L) entnommen werden, durch eine Anzahl von im Pufferspeicher gespeicherten Verarbeitungsanforderungen gegeben ist, die gleich oder ungefähr gleich der Anzahl von im FiFo-LiFo-Speicher speicherbaren Verarbeitungsanforderungen ist.

4. Schaltungsanordnung nach Anspruch 1, dadurch gekennzeichnet, dass der FiFo-LiFo-Speicher als Schieberegister ausgebildet ist, welches über seinen FiFo-Ausgang (K) Verarbeitungsanforderungen ausstösst, wenn es voll ist, und wenn jeweils eine weitere Verarbeitungsanforderung über seinen Eingang (M) eingegeben wird.

5. Schaltungsanordnung nach Anspruch 4, dadurch gekennzeichnet, dass der LiFo-Ausgang des Schieberegisters an einem Speicherglied desselben liegt, an dem auch sein Eingang liegt.

6. Schaltungsanordnung nach Anspruch 4, dadurch gekennzeichnet, dass die Verarbeitungsanforderungen im Schieberegister von Speicherglied (r) zu Speicherglied weitergeschoben werden, jeweils wenn über seinen Eingang (M) eine neue Verarbeitungsanforderung eingegeben wird.

7. Schaltungsanordnung nach Anspruch 4, dadurch gekennzeichnet, dass in dem Schieberegister eine Verschiebung der gespeicherten Verarbeitungsanforderungen sowohl von seinem Eingang (M) in Richtung zu seinem FiFo-Ausgang (K) als auch in Richtung von diesem zu seinem LiFo-Ausgang (L) durchführbar ist.

8. Schaltungsanordnung nach Anspruch 7, dadurch gekennzeichnet, dass eine Verschiebung von Verarbeitungsanforderungen in Richtung von seinem FiFo-Ausgang (K) zu seinem LiFo-Ausgang (L) jedesmal bei Entnahme einer Verarbeitungsanforderung über den letzteren erfolgt.

## Claims

1. Circuit arrangement for telecommunication exchanges, in particular telephone exchanges, with central and/or partially central information processing networks (S) with a limited performance with respect to the information processing capacity, and with buffer memories (P) preceding the networks for balancing the information processing load of the networks and serving, for this purpose, to receive temporarily information processing requests, and with traffic measuring devices (V) for detecting information processing traffic overloading of each network and for preventing such overloading by means of request reject devices (A), influenced by the traffic measuring devices, which divide incoming processing requests quantitatively into processing requests to be accepted and accordingly supplied to the respective buffer Memory on the one hand, and into the processing requests not supplied to the buffer memory on the other hand, characterized in that the information processing requests not directly supplied to the buffer memory (P) are supplied to a FiFo-LiFo memory (R) which, on the one hand, works as a FiFo memory, inasmuch as it itself is full and inasmuch as there are still processing requests stored in the buffer memory, in particular at least as long as one processing request in present, and which then marks the processing requests rejected by it as not to be accepted, and, on the other hand, works as a LiFo memory, inasmuch as no or very few (for example one) processing requests are stored in the buffer memory, whereby processing requests taken from it via a LiFo output (L) are marked as to be accepted and/or directly (e′) supplied to a network (S) for processing.

2. Circuit arrangement according to Claim 1, characterized in that processing requests taken via the LiFo output (L) are supplied (e) to the buffer memory.

3. Circuit arrangement according to Claim 1, characterized in that the level of fullness of the buffer memory, under which processing requests are also taken via the LiFo output (L), is determined by a number of processing requests stored in the buffer memory which is equal to or approximately equal to the number of processing requests which can be stored in the FiFo-LiFo memory.

4. Circuit arrangement according to Claim 1, characterized in that the FiFo-LiFo memory is designed as a shift register which ejects processing requests via its FiFo output (K) when it is full and when in each case a further processing request is entered via its input (M).

5. Circuit arrangement according to Claim 4, characterized in that the LiFo output (L) of the shift register lies at a memory element (r1) of the same, at which its input (M) also lies.

6. Circuit arrangement according to Claim 4, characterized in that the processing requests in the shift register are pushed further from memory element (r) to memory element in each case when a new processing request is entered via its input (M).

7. Circuit arrangement according to Claim 4, characterized in that in the shift register a displacement of the stored processing requests can be performed both from its input (M) towards its FiFo output (K) as well as from this input towards its LiFo output (L).

8. Circuit arrangement according to Claim 7, characterized in that a displacement of processing requests from its FiFo output (K) towards its LiFo output (L) takes place each time a processing request is removed via the latter.

## Revendications

1. Montage pour des installations de télécommunications, notamment pour des installations de commutation téléphonique, comportant des unités de commutation (S) centrales et/ou partiellement centrales, traitant des informations et possédant une capacité potentielle limitée du point de vue de la capacité de traitement d'informations, et comportant des mémoires tampons (P) montées en aval des unités de commutation et équilibrant la charge de traitement d'informations appliquée aux unités de commutation et servant à cet effet à enregistrer de façon transitoire des demandes de traitement d'informations, et des dispositifs (V) de mesure du trafic servant à identifier des surcharges du trafic de traitement d'informations d'une unité de commutation respecitve et à lutter contre de telles surcharges à l'aide de dispositifs (A) de rejet de demandes, qui sont influencés par les dispositifs de mesure du trafic et subdivisent d'une manière quantitative les demandes de traitement qui arrivent, d'une part en des demandes de traitement devant être acceptées et envoyées par conséquent à la mémoire tampon respective et d'autre part en des demandes de traitement non envoyées à la mémoire tampon, caractérisé par le fait que les demandes de traitement d'informations, non envoyées directement à la mémoire tampon (P) sont envoyées à une mémoire FiFo-LiFo (R), qui d'une part travaille en tant que mémoire FiFo, dans la mesure où elle est elle-même pleine et dans la mesure où dans la mémoire tampon il existe encore des demandes de traitement mémorisées, notamment au moins encore une demande de traitement, et signale les demandes de traitement, qui lui sont alors envoyées, comme ne devant pas être acceptées, et qui d'autre part travaille en tant que mémoire LiFo, dans la mesure où dans la mémoire tampon aucune demande de traitement n'est mémorisée ou seul encore un très petit nombre de demandes de traitement (par exemple une) sont mémorisées, auquel cas des demandes de traitement prélevées par l'intermédiaire d'une sortie LiFo (L) lui sont signalées comme devant être acceptées et/ou sont envoyées directement (e′) à une unité de commutation (S) en vue de leur traitement.

2. Montage suivant la revendication 1, caractérisé par le fait que les demandes de traitement prélevées par l'intermédiaire de la sorti LiFo (L) sont envoyées (e) à la mémoire tampon.

3. Montage suivant la revendication 1, caractérisé par le fait que le degré de remplissage de la mémoire tampon, au-dessous duquel des demandes de traitement sont également prélevées par l'intermédiaire de la sortie LiFo (L) est déterminé par un nombre de demandes de traitement mémorisées dans la mémoire tampon, qui est égal ou approximativement égal au nombre des demandes de traitement pouvant être mémorisées dans la mémoire FiFo-LiFo.

4. Montage suivant la revendication 1, caractérisé par le fait que la mémoire FiFo-LiFo est réalisée sous la forme d'un registre à décalage, qui émet, par sa sortie FiFo (k), des demandes de traitement lorsqu'il est plein et lorsqu'une autre demande respective de traitement est introduite par l'intermédiaire de son entrée (M).

5. Montage suivant la revendication 4, caractérisé par le fait que la sortie LiFo (L) du registre à décalage est raccordée à un étage de mémoire (r1), auquel est également raccordée son entrée (M).

6. Montage suivant la revendication 4, caractérisé par le fait que les demandes de traitement sont avancées d'un étage de mémoire (r) au suivant dans le registre à décalage, chaque fois qu'une novelle demande de traitement est introduite à l'entrée (M) du registre.

7. Montage suivant la revendication 4, caractérisé par le fait qu'un décalage des demandes de traitement mémorisées peut être réalisé dans le registre à décalage aussi bien depuis son entrée (M) en direction de sa sortie FiFo (K) que dans la direction de son entrée vers sa sortie LiFo (L)

8. Montage suivant la revendication 7, caractérisé par le fait qu'un décalage de demandes de traitement depuis la sortie FiFo (K) du registre vers sa sortie LiFo (L) intervient chaque fois lors du prélèvement d'une demande de traitement par l'intermédiaire de cette sortie.